# EUROPEAN PATENT APPLICATION

(11) **EP 4 622 195 A1**
(43) Date of publication of application: **24.09.2025**
(21) Application number: 22965540.2
(22) Date of filing: 17.11.2022
(51) Int. Cl.: H04L 27/00

(54) **METHOD AND APPARATUS FOR TRANSMITTING INDICATION INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/132678
(87) International publication number: WO 2024/103358

(57) **Abstract**

Provided in the present disclosure are a method and apparatus for transmitting indication information, and a readable storage medium. The method comprises: receiving first indication information sent by a network device, wherein the first indication information is used for indicating a first duration, and within the first duration, a user equipment does not expect to receive a low-power wake-up signal (LP WUS) sent by the network device. In the method of the present disclosure, a user equipment learns of a first duration by means of first indication information sent by a network device, and after receiving the first indication information, the user equipment can adaptively determine, in view of the value of the first duration, which sleep state the user equipment is in, thereby achieving effective energy saving, and facilitating timely wake-up.

## Description

### TECHNICAL FIELD

The present disclosure relates to a field of wireless communication technologies, and more particularly, to a method, an apparatus and a readable storage medium for transmitting indication information.

### BACKGROUND

In the 3rd Generation Partnership Project (3GPP), in order to achieve power saving of a terminal, a user equipment (UE) may be in different levels of sleep states when there is no data transmission and reception.

In Release 18 (R18) of 3GPP, a Low Power Wake-Up Signal (LP WUS) is introduced, a base station wakes up a UE in a sleep state by sending the LP WUS, and after a main transceiver of the UE is awakened, data transmission and reception may be performed. However, during this process, the UE may encounter problems such as failing to wake up in time or consuming unnecessary power.

### SUMMARY

The present disclosure provides a method, an apparatus, and a computer-readable storage medium for transmitting indication information.

In a first aspect, the present disclosure provides a method for receiving indication information, performed by a user equipment, including:
receiving first indication information sent by a network device, where the first indication information is configured to indicate a first duration, and during the first duration the user equipment does not expect to receive a low power wake-up signal LP WUS sent by the network device.

In the embodiment of the present disclosure, the user equipment may be informed of the first duration through the first indication information sent by the network device. After receiving the first indication information, the user equipment may, in combination with the value of the first duration, adaptively determine which sleep state to be in, so as to achieve efficient power saving and facilitate timely wake-up.

In some possible embodiments, a start time of the first duration is an effective time of a first instruction, and the first instruction is configured to indicate the user equipment to enter a sleep state.

In some possible embodiments, the method further includes:
receiving the low power wake-up signal LP WUS at an end time of the first duration or after the first duration.

In some possible embodiments, the method further includes:
not monitoring the LP WUS during the first duration.

In some possible embodiments, the method further includes:
monitoring the LP WUS during the first duration.

In some possible embodiments, the method further includes:
sending auxiliary information to the network device, where the auxiliary information is configured to indicate, when the LP WUS is received during the first duration, a first wake-up duration from a time the user equipment receives the LP WUS to a time the user equipment switches to an operational state.

In some possible embodiments, the auxiliary information includes a plurality of the first wake-up durations respectively corresponding to different first durations.

In some possible embodiments, the method further includes:
receiving second indication information sent by the network device, where the second indication information is configured to indicate, when the LP WUS is received outside the first duration, a second wake-up duration from a time the user equipment receives the LP WUS to a time the user equipment switches into an operational state.

In some possible embodiments, the receiving the first indication information sent by the network device includes:
receiving a high-layer signaling sent by the network device, where the high-layer signaling includes an information field for indicating the first indication information.

In some possible embodiments, the receiving the first indication information sent by the network device includes:
receiving downlink control information DCI sent by the network device, where the DCI includes an information field for indicating the first indication information.

In some possible embodiments, the first indication information indicated by the DCI takes effect after a second duration from reception of the DCI by the user equipment.

In some possible embodiments, before receiving (N+1)th first indication information, Nth first indication information remains effective.

In a second aspect, the present disclosure provides a method for sending indication information, performed by a network device, including:
sending first indication information to a user equipment, where the first indication information is configured to indicate a first duration, and during the first duration the user equipment does not expect to receive a low power wake-up signal LP WUS sent by the network device.

In the disclosed method, the network device informs the user equipment of the first duration by sending the first indication information, after receiving the first indication information, the user equipment may, in combination with the value of the first duration, adaptively determine which sleep state to be in, so as to achieve effective energy saving and facilitate timely wake-up.

In some possible embodiments, a start time of the first duration is an effective time of a first instruction, and the first instruction is configured to indicate the user equipment to enter a sleep state.

In some possible embodiments, the sending the first indication information to the user equipment includes:
sending a high-layer signaling to the user equipment, where the high-layer signaling includes an information field for indicating the first indication information.

In some possible embodiments, the sending the first indication information to the user equipment includes:
sending DCI to the user equipment, where the DCI includes an information field for indicating the first indication information.

In some possible embodiments, the first indication information indicated by the DCI takes effect after a first duration from reception of the DCI by the user equipment.

In some possible embodiments, before the user equipment receives (N+1)th first indication information, Nth first indication information remains effective.

In some possible embodiments, the method further includes:
not sending downlink information during the first duration.

In some possible embodiments, the method further includes:
sending the LP WUS to the user equipment at a first time; and
sending downlink information after a wake-up duration from reception of the LP WUS by the user equipment.

In some possible embodiments, if the first time is within the first duration, the wake-up duration is a first wake-up duration.

In some possible embodiments, the method further includes:
receiving auxiliary information sent by the user equipment, where the auxiliary information is configured to indicate, when the user equipment receives the LP WUS during the first duration, the first wake-up duration from a time the user equipment receives the LP WUS to a time the user equipment switches to an operational state; and
determining the first wake-up duration corresponding to the auxiliary information according to the auxiliary information.

In some possible embodiments, if the first time is outside the first duration, the wake-up duration is a second wake-up duration.

In some possible embodiments, the method further includes:
sending second indication information to the user equipment, where the second indication information is configured to indicate, when the user equipment receives the LP WUS outside the first duration, the second wake-up duration from a time the user equipment receives the LP WUS to a time the user equipment switches into an operational state.

In a third aspect, the present disclosure provides an apparatus for receiving indication information, the apparatus being configured to perform the steps executed by the user equipment in the above first aspect or any possible design thereof. The user equipment may implement the functions of the above methods through a hardware structure, a software module, or a combination of a hardware structure and a software module.

When the apparatus described in the third aspect is implemented by a software module, the apparatus may include a transceiver module, where the transceiver module may be configured to support the communication apparatus for communication.

When performing the steps described in the above first aspect, the transceiver module is configured to receive first indication information sent by the network device, where the first indication information is configured to indicate a first duration, and during the first duration, the user equipment does not expect to receive a Low Power Wake-Up Signal LP WUS sent by the network device.

In a fourth aspect, the present disclosure provides an apparatus for sending indication information, the apparatus being configured to perform the steps executed by the network device in the above second aspect or any possible design thereof. The network device may implement the functions of the above methods through a hardware structure, a software module, or a combination of a hardware structure and a software module.

When the apparatus described in the fourth aspect is implemented by a software module, the apparatus may include a transceiver module, where the transceiver module may be configured to support the communication apparatus for communication.

When performing the steps described in the above second aspect, the transceiver module is configured to send first indication information to the user equipment, where the first indication information is configured to indicate a first duration, and the first duration corresponds to a period during which the user equipment is capable of being in a sleep state.

In a fifth aspect, the present disclosure provides a communication apparatus, including a processor and a memory; the memory is configured to store a computer program; the processor is configured to execute the computer program so as to implement the first aspect or any possible design thereof.

In a sixth aspect, the present disclosure provides a communication apparatus, including a processor and a memory; the memory is configured to store a computer program; the processor is configured to execute the computer program so as to implement the second aspect or any possible design thereof.

In a seventh aspect, the present disclosure provides a computer-readable storage medium, wherein instructions (also referred to as a computer program or program) are stored in the computer-readable storage medium, and when the instructions are invoked and executed on a computer, the computer executes the above first aspect or any possible design thereof.

In an eighth aspect, the present disclosure provides a computer-readable storage medium, wherein instructions (also referred to as a computer program or program) are stored in the computer-readable storage medium, and when the instructions are invoked and executed on a computer, the computer executes the above second aspect or any possible design thereof.

It should be understood that the above general description and the following detailed description are merely exemplary and explanatory, and may not limit the present disclosure.

### BRIEF DESCRIPTION OF THE DRAWINGS

The drawings described herein are provided for further understanding of the embodiments of the present disclosure, and constitute a part of this application. The exemplary embodiments and their descriptions of the present disclosure are used to explain the embodiments of the present disclosure and do not constitute improper limitations on the embodiments of the present disclosure. In the drawings:
the drawings described herein are incorporated into the specification and constitute a part of the specification, show embodiments consistent with the present disclosure and, together with the specification, serve to explain principles of the embodiments of the present disclosure.
FIG. 1 is a schematic diagram of a wireless communication system architecture provided in an embodiment of the present disclosure;
FIG. 2 is a flowchart of a method for transmitting indication information according to an exemplary embodiment;
FIG. 3 is a flowchart of a method for receiving indication information according to an exemplary embodiment;
FIG. 4 is a flowchart of another method for receiving indication information according to an exemplary embodiment;
FIG. 5 is a flowchart of yet another method for receiving indication information according to an exemplary embodiment;
FIG. 6 is a flowchart of a method for sending indication information according to an exemplary embodiment;
FIG. 7 is a schematic diagram illustrating an application of a first duration according to an exemplary embodiment;
FIG. 8 is a schematic diagram illustrating an application of a first duration according to another exemplary embodiment;
FIG. 9 is a schematic diagram illustrating an application of a first duration according to another exemplary embodiment;
FIG. 10 is a schematic diagram illustrating an application of a first duration according to another exemplary embodiment;
FIG. 11 is a block diagram of an apparatus for receiving indication information according to an exemplary embodiment;
FIG. 12 is a block diagram of a user equipment according to an exemplary embodiment;
FIG. 13 is a block diagram of an apparatus for sending indication information according to an exemplary embodiment;
FIG. 14 is a block diagram of a communication apparatus according to an exemplary embodiment.

### DETAILED DESCRIPTION

Embodiments of the present disclosure are further described below in conjunction with the drawings and the detailed description.

Exemplary embodiments are described in detail herein, with examples illustrated in the drawings. When the following description refers to the drawings, unless otherwise indicated, the same or similar reference numerals in different drawings refer to the same or similar elements. The embodiments described in the following exemplary embodiments do not represent all embodiments consistent with the present disclosure. On the contrary, they are merely examples of apparatus and method that are consistent with some aspects of the present disclosure as detailed in the appended claims.

The terms used in the embodiments of the present disclosure are merely for the purpose of describing particular embodiments and are not intended to limit the present disclosure. The singular forms "a" and "the" as used in the present disclosure and the appended claims are also intended to include the plural forms, unless the context clearly indicates otherwise. It should also be understood that the term "and/or" as used herein refers to and includes any and all possible combinations of one or more of the associated listed items.

It should be understood that although the terms first, second, third, etc. may be used to describe various information in the embodiments of the present disclosure, such information is not limited by these terms. These terms are used only to distinguish information of a same type. For example, without departing from the scope of the present disclosure, a first information may also be referred to as a second information, and similarly, the second information may also be referred to as the first information. Depending on the context, the terms "on condition that" "if" as used herein may be interpreted as "upon" or "when" or "in response to determining".

The embodiments of the present disclosure are described in detail below. The embodiments are illustrated in the drawings, in which the same or similar reference numerals refer to the same or similar elements throughout. The embodiments described with reference to the drawings are exemplary and are intended to explain the present disclosure, and are not to be construed as limiting the present disclosure.

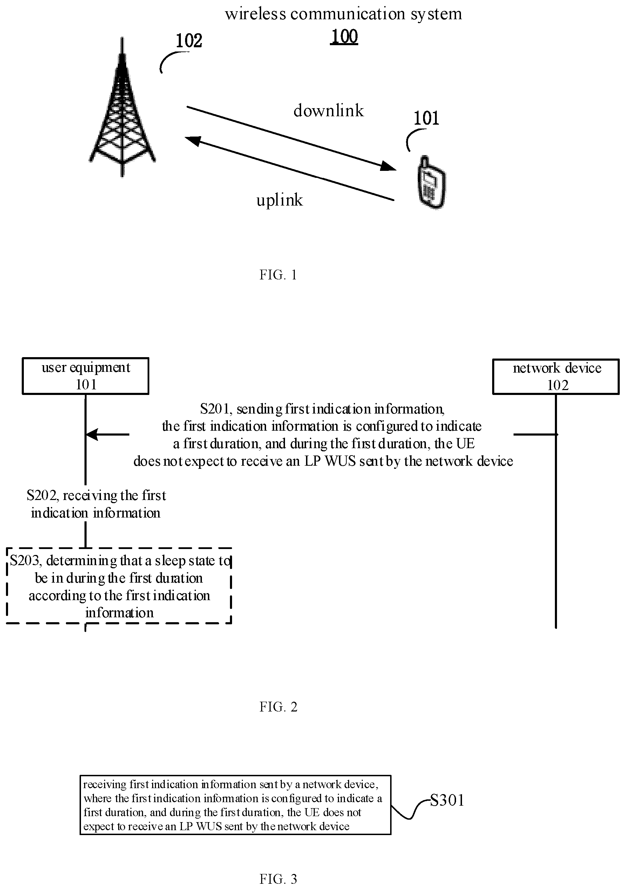

As shown in FIG. 1, a method for transmitting indication information provided in an embodiment of the present disclosure may be applied to a wireless communication system 100. The wireless communication system may include a user equipment 101 and a network device 102. The user equipment 101 may be configured to support carrier aggregation and may connect to a plurality of carrier units of the network device 102, including one primary carrier unit and one or more secondary carrier units.

It should be understood that the wireless communication system 100 described above may be applicable to both low-frequency scenarios and high-frequency scenarios. The application scenarios of the wireless communication system 100 include, but are not limited to, a Long Term Evolution (LTE) system, an LTE Frequency Division Duplex (FDD) system, an LTE Time Division Duplex (TDD) system, a Worldwide Interoperability for Microwave Access (WiMAX) communication system, a Cloud Radio Access Network (CRAN) system, a future 5th-Generation (5G) system, a New Radio (NR) communication system, or a future evolved Public Land Mobile Network (PLMN) system, and the like.

The above user equipment 101 described above may be a terminal, an access terminal, a terminal unit, a terminal station, a mobile station (MS), a remote station, a remote terminal, a mobile terminal, a wireless communication device, a terminal proxy, or a terminal device. The user equipment 101 may have wireless transceiving functionality and may communicate (e.g., wirelessly) with one or more network devices of one or more communication systems and receive a network service provided by the network device, the network device herein includes, but is not limited to, the illustrated network device 102.

The user equipment (UE) 101 may be a cellular phone, a cordless phone, a session initiation protocol (SIP) phone, a wireless local loop (WLL) station, a personal digital assistant (PDA) device, a handheld device with wireless communication functionality, a computing device or another processing device connected to a wireless modem, a vehicle-mounted device, a wearable device, a terminal device in a future 5G network, or a terminal device in a future evolved PLMN network.

The network device 102 may be an access network device (also referred to as an access site). The access network device refers to a device that provides network access functionality, such as a radio access network (RAN) base station. Specifically, the network device 102 may include a base station (BS), or a base station together with radio resource management device for controlling the base station. The network device 102 may further include a relay station (relay device), an access point, a base station in a future 5G network, a base station in a future evolved PLMN network, or an NR base station. The network device 102 may be a wearable device or a vehicle-mounted device. The network device 102 may also be a communication chip with a communication module.

For example, the network device 102 may include, but is not limited to: a next-generation base station (gNodeB, gNB) in 5G, an evolved NodeB (eNB) in an LTE system, a radio network controller (RNC), a NodeB (NB) in a WCDMA system, a radio controller in a CRAN system, a base station controller (BSC), a base transceiver station (BTS) in a GSM system or CDMA system, a home base station (e.g., home evolved NodeB or home NodeB, HNB), a baseband unit (BBU), a transmitting and receiving point (TRP), a transmitting point (TP), or a mobile switching center.

When the user equipment 101 is in different levels of sleep states, the power consumptions for the user equipment are different, and times to wake up are different. For example, the deeper the level of the sleep state, the lower the power consumption of the UE, and the longer the time to wake up required.

After the user equipment 101 enters a sleep state, a timing of receiving an LP WUS depends on the downlink service situation, however, the user equipment 101 cannot be informed of the downlink service situation. If the user equipment 101 remains in a relatively deep sleep state, although energy may be maximally saved, the user equipment may not be able to be woken up in time upon receiving the LP WUS, and thus may fail to receive the downlink information in time. If the user equipment 101 remains in a relatively shallow sleep state, although the user equipment may be woken up promptly to receive the downlink information, the user equipment may waste energy as it remains in the shallow sleep state for a long time. Therefore, there exists a problem in that the UE may fail to be woken up in time or the power consumption may be wasted.

An embodiment of the present disclosure provides a method for transmitting indication information. Referring to FIG. 2, FIG. 2 illustrates a method for transmitting indication information according to an exemplary embodiment. As shown in FIG. 2, the method includes steps S201 to S202, specifically:
step S201: the network device 102 sends first indication information to the user equipment 101, where the first indication information is configured to indicate a first duration, and during the first duration, the user equipment does not expect to receive a Low Power Wake-Up Signal LP WUS sent by the network device.
step S202: the user equipment 101 receives the first indication information.

In some possible embodiments, the first duration may be configured by the network device 102 in combination with a transmission interval of the LP WUS, and that is, when the network device 102 configures the first duration, it determines that there is a high probability that the LP WUS is not sent during the first duration.

In some possible embodiments, the transmission interval of the LP WUS and the configuration of the first duration may be related to the downlink service situation. For example, when the transmission interval between adjacent downlink data packets is relatively large (e.g., several hundred milliseconds), the transmission interval of the LP WUS and the first duration are relatively long. For another example, when the transmission interval between adjacent downlink data packets is relatively small (e.g., several milliseconds), the transmission interval of the LP WUS and the first duration are relatively short.

In an example: a service period of downlink data packets is 33 ms, and thus the network device 102 may configure the first duration to be less than or equal to 33 ms.

In some possible embodiments, the network device 102 semi-statically configures the first indication information via a high-layer signaling. For example, the first indication information is configured via a Radio Resource Control (RRC) signaling.

In some possible embodiments, the network device 102 dynamically configures the first indication information via Downlink Control Information (DCI).

In some possible embodiments, after receiving the first indication information, the user equipment 101 may select which sleep state to enter during the first duration in combination with a value of the first duration.

In some possible embodiments, the embodiment may further include the following step S203, specifically:
In step S203: it is determined that a sleep state that the user equipment is in during the first duration according to the first indication information.

In an example, when the first duration is relatively long, the user equipment 101 may be in a relatively deep sleep state during the first duration.

In an example, when the first duration is relatively short, the user equipment 101 may be in a relatively shallow sleep state during the first duration.

In some possible embodiments, the sleep states of the user equipment 101 from deep to shallow may include: a deep sleep state, a light sleep state, and a micro sleep state.

In some possible embodiments, in the sleep state, the user equipment 101 does not monitor a downlink channel. For example, in the sleep state, the user equipment 101 does not monitor a Physical Downlink Control Channel (PDCCH), or does not monitor a Physical Downlink Shared Channel (PDSCH), or does not monitor any downlink channel.

In the embodiment of the present disclosure, the user equipment 101 may be informed of the first duration through the first indication information sent by the network device 102. After receiving the first indication information, the user equipment 101 may, in combination with the value of the first duration, adaptively determine which sleep state to be in, so as to achieve efficient power saving and facilitate timely wake-up.

An embodiment of the present disclosure provides a method for receiving indication information, performed by a user equipment 101. Referring to FIG. 3, FIG. 3 illustrates a method for receiving indication information according to an exemplary embodiment. As shown in FIG. 3, the method includes step S301, specifically:
in step S301: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.

In some possible embodiments, the network device 102 may not send the LP WUS during the first duration, i.e., there may be no requirement to send the downlink information.

In some possible embodiments, after receiving the first indication information, the user equipment 101 may select a state to be in during that first duration.

In some possible embodiments, after receiving the first indication information, the user equipment 101 may select to be in a sleep state within the first duration.

In an example, in the sleep state, the user equipment 101 does not monitor the downlink channel. For example, the user equipment 101 does not monitor the PDCCH, or does not monitor the PDSCH, or does not monitor any downlink channel.

In an example, according to a length of the first duration, the user equipment 101 may select to be in a deep sleep state, a light sleep state, or a micro sleep state. For example, when the first duration is relatively long, the user equipment 101 may be in a relatively deep sleep state during the first duration.

In an example, when the first duration is relatively long, the user equipment 101 may be sequentially in a plurality of sleep states during the first duration. For example, the user equipment may be in a deep sleep state during a first part of the first duration, and be in a micro sleep state during a second part of the first duration, where the second part is close to an end time of the first duration, so as to enable timely wake-up.

In some other possible embodiments, after receiving the first indication information, some user equipment 101 may still select to be in an operational state.

In the embodiment of the present disclosure, the user equipment may be informed of the first duration through the first indication information sent by the network device. After receiving the first indication information, the user equipment may, in combination with the value of the first duration, adaptively determine which sleep state to be in, so as to achieve efficient power saving and facilitate timely wake-up.

An embodiment of the present disclosure provides a method for receiving indication information, performed by a user equipment 101. The method includes step S301, specifically:
In step S301: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.

A start time of the first duration is an effective time of a first instruction, where the first instruction is configured to indicate the user equipment to enter a sleep state.

In some possible embodiments, at the effective time of the first instruction, the user equipment 101 starts to enter the sleep state, i.e., the start time of the first duration is also the time when the user equipment 101 starts to enter the sleep state.

In some possible embodiments, the first instruction may be an instruction to enter the sleep state (go to sleep) sent by the network device 102.

In an example, the first instruction may take effect when received by the user equipment 101. When the first instruction takes effect, the user equipment 101 starts to enter the sleep state. In this case, the start time of the first duration is the time when the user equipment 101 receives the first instruction, that is, the time when the user equipment 101 starts to enter the sleep state.

In another example, the first instruction may take effect after a preset duration from the time the user equipment 101 receives the instruction. When the first instruction takes effect, the user equipment 101 starts to enter the sleep state. In this case, the start time of the first duration is the time after the preset duration from the reception of the instruction by the user equipment 101, and that is, the time when the user equipment 101 starts to enter the sleep state.

In some possible embodiments, the network device 102 may use different signaling to send the first instruction and the first indication information, respectively, or send both the first instruction and the first indication information in the same signaling, for example, by indicating the first instruction and the first indication information in different information fields of the same signaling.

In some possible embodiments, the first instruction corresponds to a timer with a specified purpose configured by the network device 102, and the effective time of the first instruction is a timeout time of the timer with the specified purpose. When the first instruction takes effect, the user equipment 101 starts to enter the sleep state. For example, the timer with the specified purpose may be an inactivity timer in a Connected Discontinuous Reception (C-DRX) configuration. The start time of the first duration is the timeout time of all timers during the C-DRX process, that is, the time at which the user equipment 101 starts to enter the sleep state.

In the embodiment of the present disclosure, the start time of the first duration may be determined through the first instruction sent by the network device 102 to indicate the user equipment 101 to enter the sleep state. Therefore, during the first duration starting from this start time, the user equipment 101 may select a sleep state to be in, so as to save energy without affecting the reception of the downlink information.

An embodiment of the present disclosure provides a method for receiving indication information, performed by a user equipment 101. The method includes steps S301 to S302, specifically:
in step S301: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.
in step S302: receiving the Low Power Wake-Up Signal LP WUS at an end time of the first duration or after the first duration.

In some possible embodiments, when the network device 102 configures the first duration, the end time of the first duration represents the time at which the base station may start sending the LP WUS, i.e., the network device 102 expects to send the downlink information after the first duration.

In some possible embodiments, the network device 102 sends the LP WUS from the end time of the first duration or after the first duration. The user equipment 101 starts to receive or monitor the LP WUS from the end time of the first duration or after the first duration.

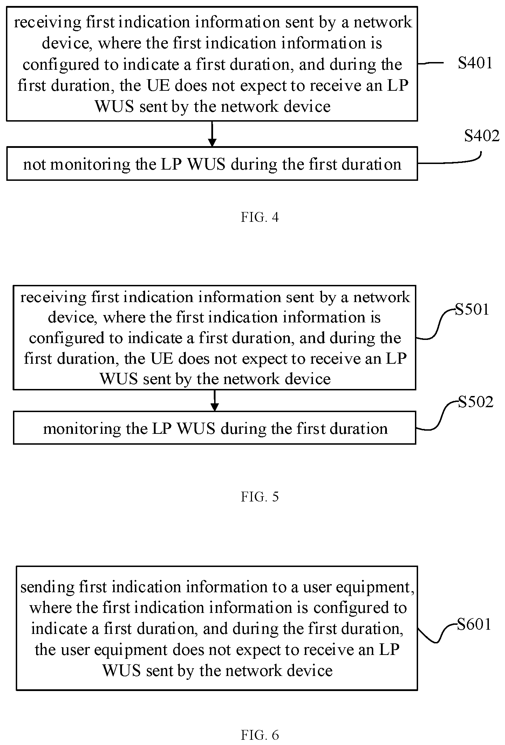

An embodiment of the present disclosure provides a method for receiving indication information, performed by a user equipment 101. Referring to FIG. 4, FIG. 4 is a method for receiving indication information according to an exemplary embodiment. As shown in FIG. 4, the method includes steps S401 to S402, specifically:
in step S401: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.
in step S402: the user equipment 101 does not monitor the LP WUS during the first duration.

In some possible embodiments, the user equipment 101 may be in a sleep state during the first duration, that is, the main transceiver of the user equipment 101 is in a sleep state.

In an example, in the sleep state, the user equipment 101 does not monitor the downlink channel. For example, it does not monitor the PDCCH, or does not monitor the PDSCH, or does not monitor any downlink channel.

In some possible embodiments, during the first duration, a low-power transceiver of the user equipment 101 may not need to monitor the LP WUS. After the first duration ends, the low-power transceiver starts to monitor the LP WUS.

In the embodiment of the present disclosure, the main transceiver of the user equipment 101 may be in the sleep state during the first duration, and the low-power receiver does not monitor the LP WUS, so as to further save energy.

An embodiment of the present disclosure provides a method for receiving indication information, performed by a user equipment 101. Referring to FIG. 5, FIG. 5 is a method for receiving indication information according to an exemplary embodiment. As shown in FIG. 5, the method includes steps S501 to S502, specifically:
in step S501: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.
in step S502: the user equipment 101 monitors the LP WUS during the first duration.

In the embodiment of the present disclosure, the main transceiver of the user equipment 101 may be in the sleep state during the first duration, and the low-power receiver may still monitor the LP WUS during the first duration, such that when the network device has a new downlink information transmission requirement, the UE may be woken up in time to receive the downlink data.

An embodiment of the present disclosure provides a method for receiving indication information, performed by a user equipment 101. The method includes steps S501-1, S501-2, and S502, specifically:
in step S501-1: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.
in step S501-2: the user equipment 101 sends auxiliary information to the network device, where the auxiliary information is configured to indicate a first wake-up duration from a time the user equipment receives the LP WUS to a time the user equipment switches to an operational state, when the LP WUS is received during the first duration.
in step S502: the user equipment 101 monitors the LP WUS during the first duration.

The orders of step S501-1 and step S501-2 is merely illustrative rather than limiting, and in the implementations, the step S501-2 may be performed first.

In some possible embodiments, the user equipment 101 may report the auxiliary information in advance, to indicate the first wake-up duration corresponding to receiving the LP WUS during the first duration.

In some possible embodiments, the network device 102 sends the LP WUS when there is a need to send the downlink information.

In some possible embodiments, the network device 102 may be informed of when the user equipment 101 wakes up from the auxiliary information, so as to send the downlink information after the user equipment 101 wakes up.

The wake-up of the user equipment 101 refers to that the main transceiver switches from the sleep state to the operational state, and in the operational state, the user equipment 101 may normally monitor the downlink channel, such as PDCCH.

In some possible embodiments, the step S501-2 may include the following step S501-2', for example:
in step S501-2': the user equipment 101 sends corresponding auxiliary information to the network device 102 according to the first indication information.

In this embodiment, the user equipment 101 may determine the first wake-up duration corresponding to the first duration and report the first wake-up duration.

In an example, referring to Table 1, the first duration and the first wake-up duration may have the following correspondence:

**Table 1**

| first duration | first wake-up duration |
|---|---|
| T11 | T21 |
| T12 | T22 |
| T13 | T23 |

In this embodiment, the user equipment 101 may determine a range in which the first duration falls and determine the first wake-up duration corresponding to the range, and then report the first wake-up duration.

In an example, referring to Table 2, the range of the first duration and the first wake-up duration may have the following correspondence:

**Table 2**

| range of first duration | first wake-up duration |
|---|---|
| less than T11 | T21 |
| [T11, T12] | T22 |
| greater than T12 | T23 |

In some possible embodiments, the auxiliary information includes a plurality of first wake-up durations respectively corresponding to different first durations.

In this embodiment, in the auxiliary information, the user equipment 101 may report a plurality of first wake-up durations, and the network device 102 determines a first wake-up duration corresponding to the first duration, referring to Table 1; or a first wake-up duration corresponding to the range in which the first duration falls, referring to Table 2.

In the embodiment of the present disclosure, the user equipment 101 monitors the LP WUS during the first duration and may report the first wake-up duration to the network device 102 in advance. After the network device 102 sends the LP WUS during the first duration, the network device 102 may, in combination with the first wake-up duration, send the downlink information at an appropriate time, such that the user equipment 101 may timely receive the downlink information.

An embodiment of the present disclosure provides a method for receiving indication information, performed by a user equipment 101. The method includes steps S301-1 to S301-2, specifically:
in step S301-1: the user equipment 101 receives first indication information sent by a network device 102, where the first indication information is configured to indicate a first duration, and during the first duration, the user equipment 101 does not expect to receive a Low Power Wake-Up Signal LP WUS sent by the network device 102.
in step S301-2: the user equipment 101 receives second indication information sent by the network device 102, where the second indication information is configured to indicate a second wake-up duration from a time the user equipment 101 receives the LP WUS to a time the user equipment switches into an operational state when the LP WUS is received outside the first duration.

The execution orders of step S301-1 and step S301-2 is merely illustrative rather than limiting. For example, step S301-2 may be executed first, or step S301-1 and step S301-2 may be executed simultaneously.

In an example, the network device 102 indicates the first indication information and the second indication information in different information fields of the same signaling.

In some possible embodiments, the user equipment 101 does not monitor the LP WUS during the first duration.

In some possible embodiments, the user equipment 101 receives the LP WUS at the end time of the first duration or after the first duration.

In some possible embodiments, when the LP WUS is received outside the first duration, the user equipment 101, according to the second indication information, needs to be woken up at the end time of the second wake-up duration, and may be switched into an operational state capable of monitoring a channel such as the PDCCH.

In some possible embodiments, the embodiment of the present disclosure provides different wake-up durations for the user equipment 101 when the user equipment is woken up during the first duration or when the user equipment is woken up outside the first duration.

For example, the first wake-up duration corresponding to the wake-up during the first duration may be longer than the second wake-up duration corresponding to the wake-up outside the first duration.

For the first duration configured by the network device 102, the user equipment 101 assumes that the user equipment does not receive the LP WUS and determines the sleep state that the user equipment is in during the first duration according to the value of the first duration, for example, the user equipment being in a deep sleep state, and the first wake-up duration corresponds to a wake-up duration of the deep sleep state, while outside the first duration, the user equipment 101 may be ready at any time to receive the LP WUS of the network device 102, and thus may be in a relatively shallow sleep state. In this case, the second wake-up duration corresponds to a wake-up duration from the relatively shallow sleep state.

In the embodiment of the present disclosure, when the user equipment 101 wakes up outside the first duration, the user equipment may be woken up according to the second wake-up duration indicated by the network device 102, so as to timely receive the downlink information.

An embodiment of the present disclosure provides a method for receiving indication information, performed by a user equipment 101. The method includes step S301', specifically:
in step S301': the user equipment 101 receives a high-layer signaling sent by the network device 102, where the a high-layer signaling includes an information field for indicating the first indication information.

The first indication information is configured to indicate a first duration, and during the first duration, the user equipment 101 does not expect to receive a Low Power Wake-Up Signal LP WUS sent by the network device 102.

In some possible embodiments, the network device 102 sends the first indication information through an RRC signaling.

In some possible embodiments, the first indication information sent by the network device 102 may remain effective until new first indication information is sent.

In an example, before (N+1)th first indication information is received, Nth first indication information remains effective.

In this example, before receiving the (N+1)th first indication information, the user equipment 101 selects a sleep state that the user equipment is in during the first duration according to the first duration corresponding to the Nth first indication information.

In the embodiment of the present disclosure, the network device 102 may configure the first duration for the user equipment 101 by means of semi-static configuration.

An embodiment of the present disclosure provides a method for receiving indication information, performed by a user equipment 101. The method includes step S301", specifically:
in step S301": the user equipment 101 receives Downlink Control Information DCI sent by a network device 102, where the DCI includes an information field for indicating first indication information.

The first indication information is configured to indicate a first duration, and during the first duration, the user equipment 101 does not expect to receive a Low Power Wake-Up Signal LP WUS sent by the network device 102.

In some possible embodiments, the information field of the DCI for indicating the first indication information may occupy 2 bits, and different values of the 2 bits correspond to different first wake-up durations indicated.

In an example, referring to Table 3, the correspondence between the value of the 2 bits in the information field and the first duration may be shown with reference to Table 3. Accordingly, the user equipment 101 may determine the indicated first duration according to the value of the 2 bits.

In an example, corresponding four first duration candidate values shown in Table 3 may be configured via a high-layer signaling of the network device 102.

**Table 3**

| first duration | first duration |
|---|---|
| 00 | T11 |
| 01 | T12 |
| 10 | T13 |
| 11 | T14 |

In some possible embodiments, the first indication information indicated by the DCI takes effect after a second duration from the time the user equipment receives the DCI.

In this embodiment, the second duration may include a time for the user equipment 101 to process and demodulate the DCI.

In this embodiment, the time the user equipment 101 receives the DCI is t, the first indication information carried by the DCI takes effect at time t', which is the time after the second duration from time t. After the first indication information takes effect, the user equipment 101 may apply the first duration indicated by the first indication information in a scenario where the user equipment 101 enters the sleep state.

In an example, before the (N+1)th first indication information is received, the Nth first indication information remains effective.

In this example, before receiving the (N+1)th first indication information, the user equipment 101 selects the sleep state to be in during the first duration, according to the first duration corresponding to the Nth first indication information.

In the embodiment of the present disclosure, the network device 102 may dynamically configure the first duration for the user equipment 101.

An embodiment of the present disclosure provides a method for sending indication information, performed by a network device 102. Referring to FIG. 6, FIG. 6 is a method for sending indication information according to an exemplary embodiment. As shown in FIG. 6, the method includes step S601, specifically:
in step S601: the network device 102 sends first indication information to a user equipment 101, where the first indication information is configured to indicate a first duration, and during the first duration, the user equipment does not expect to receive a Low Power Wake-Up Signal LP WUS sent by the network device.

In some possible embodiments, the first duration may be configured by the network device 102 in combination with a transmission interval of the LP WUS, and that is, when the network device 102 configures the first duration, it determines that there is a high probability that the LP WUS is not sent during the first duration.

In some possible embodiments, the transmission interval of the LP WUS and the configuration of the first duration may be related to the downlink service situation. For example, when the transmission interval between adjacent downlink data packets is relatively large (e.g., several hundred milliseconds), the transmission interval of the LP WUS and the first duration are relatively long. For another example, when the transmission interval between adjacent downlink data packets is relatively small (e.g., several milliseconds), the transmission interval of the LP WUS and the first duration are relatively short.

In an example: a service period of downlink data packets is 33 ms, and thus the network device 102 may configure the first duration to be less than or equal to 33 ms.

In the embodiment of the present disclosure, the network device 102 informs the user equipment 101 of the first duration by sending the first indication information, after receiving the first indication information, the user equipment 101 may adaptively determine which sleep state to be in, in combination with the value of the first duration, so as to achieve efficient power saving and facilitate timely wake-up.

An embodiment of the present disclosure provides a method for sending indication information, performed by a network device 102. The method includes step S601, specifically:
in step S601: the network device 102 sends first indication information to a user equipment 101, where the first indication information is configured to indicate a first duration, and during the first duration, the user equipment does not expect to receive a Low Power Wake-Up Signal LP WUS sent by the network device.

A start time of the first duration is an effective time of a first instruction, where the first instruction is configured to instruct the user equipment to enter a sleep state.

In some possible embodiments, the first instruction may be an instruction sent by the network device 102 to instruct entry into the sleep state.

In an example, the first instruction may take effect when received by the user equipment 101. When the first instruction takes effect, the user equipment 101 starts to enter the sleep state. In this case, the start time of the first duration is the time when the user equipment 101 receives the first instruction, that is, the time when the user equipment 101 starts to enter the sleep state.

In another example, the first instruction may take effect after a preset duration from the time the user equipment 101 receives the instruction. When the first instruction takes effect, the user equipment 101 starts to enter the sleep state. In this case, the start time of the first duration is the time after the preset duration from the reception of the instruction by the user equipment 101, and that is, the time when the user equipment 101 starts to enter the sleep state.

In some possible embodiments, the network device 102 may use different signaling to send the first instruction and the first indication information, respectively, or send both the first instruction and the first indication information in the same signaling, for example, by indicating the first instruction and the first indication information in different information fields of the same signaling.

In some possible embodiments, the first instruction corresponds to a timer with a specified purpose configured by the network device 102, and the effective time of the first instruction is a timeout time of the timer with the specified purpose. When the first instruction takes effect, the user equipment 101 starts to enter the sleep state. For example, the timer with the specified purpose may be an inactivity timer in a C-DRX configuration, and the start time of the first duration is the timeout time of all timers during the C-DRX process, that is, the time at which the user equipment 101 starts to enter the sleep state.

In some possible embodiments, when the network device 102 configures the first duration, the end time of the first duration represents the time at which the base station may start sending the LP WUS, i.e., the network device 102 expects to send the downlink information after the first duration.

In the embodiment of the present disclosure, the start time of the first duration may be determined through the first instruction sent by the network device 102 to indicate the user equipment 101 to enter the sleep state. Therefore, during the first duration starting from this start time, the user equipment 101 may select a sleep state to be in, so as to save energy without affecting the reception of the downlink information.

An embodiment of the present disclosure provides a method for sending indication information, performed by a network device 102. The method includes step S601', specifically:
in step S601': the network device 102 sends a high-layer signaling to a user equipment 101, where the a high-layer signaling includes an information field for indicating first indication information.

The first indication information is configured to indicate a first duration, and during the first duration, the user equipment 101 does not expect to receive a Low Power Wake-Up Signal LP WUS sent by the network device 102.

In some possible embodiments, the network device 102 sends the first indication information through an RRC signaling.

In some possible embodiments, the first indication information sent by the network device 102 may remain effective until new first indication information is sent.

In an example, before (N+1)th first indication information is received, Nth first indication information remains effective. In this example, before receiving the (N+1)th first indication information, the user equipment 101 selects a sleep state that the user equipment is in during the first duration according to the first duration corresponding to the Nth first indication information.

In the embodiment of the present disclosure, the network device 102 may configure the first duration for the user equipment 101 by means of semi-static configuration.

An embodiment of the present disclosure provides a method for sending indication information, performed by the network device 102. The method includes step S601", specifically:
in step S601": the network device 102 sends DCI to a user equipment, where the DCI includes an information field for indicating first indication information.

The first indication information is configured to indicate a first duration, and during the first duration, the user equipment 101 does not expect to receive a Low Power Wake-Up Signal LP WUS sent by the network device 102.

In some possible embodiments, the information field of the DCI for indicating the first indication information may occupy 2 bits, and different values of the 2 bits correspond to different first wake-up durations indicated, as shown in Table 3.

In some possible embodiments, the first indication information indicated by the DCI takes effect after a second duration from the time the user equipment receives the DCI.

In this embodiment, the second duration may include a time for the user equipment 101 to process and demodulate the DCI.

In this embodiment, the time the user equipment 101 receives the DCI is t, the first indication information carried by the DCI takes effect at time t', which is the time after the second duration from time t. After the first indication information takes effect, the user equipment 101 may apply the first duration indicated by the first indication information in a scenario where the user equipment 101 enters the sleep state.

In an example, before the (N+1)th first indication information is received, the Nth first indication information remains effective. In this example, before receiving the (N+1)th first indication information, the user equipment 101 selects the sleep state to be in during the first duration, according to the first duration corresponding to the Nth first indication information.

In the embodiment of the present disclosure, the network device 102 may dynamically configure the first duration for the user equipment 101.

An embodiment of the present disclosure provides a method for sending indication information, performed by a network device 102. The method includes steps S601 to S602, specifically:

in step S601: the network device 102 sends first indication information to a user equipment 101, where the first indication information is configured to indicate a first duration, and during the first duration, the user equipment does not expect to receive a Low Power Wake-Up Signal LP WUS sent by the network device.
in step S602: the network device 102 does not send downlink information during the first duration.

In some possible embodiments, the network device 102 may configure the first duration in combination with a service period of the downlink information.

In an example, the service period of the downlink data packets is 33 ms, the network device 102 may configure the first duration to be less than or equal to 33 ms, for example, 20 ms. During the first duration, the network device 102 may send downlink data or other downlink information.

In some possible embodiments, the network device 102 does not send the downlink information during the first duration, and the downlink information may include the LP WUS and other downlink information.

In the embodiment of the present disclosure, the network device 102 does not send the downlink information during the first duration, such that the user equipment 101 may select an appropriate sleep state during the first duration, so as to save energy without affecting the reception of the downlink data.

An embodiment of the present disclosure provides a method for sending indication information, performed by a network device 102. The method includes steps S601, S603, and S604, specifically:
in step S601: the network device 102 sends first indication information to a user equipment 101, where the first indication information is configured to indicate a first duration, and during the first duration, the user equipment does not expect to receive a Low Power Wake-Up Signal LP WUS sent by the network device.
in step S603: the network device 102 sends the LP WUS to the user equipment 101 at a first time.
in step S604: the network device 102 sends downlink information after a wake-up duration from reception of the LP WUS by the user equipment.

In some possible embodiments, the network device 102 sends the LP WUS to the user equipment 101 when there is a need to send the downlink information.

In some possible embodiments, a timing at which the network device 102 to send the downlink information may be when the user equipment 101 has switched to the operational state, i.e., when the UE may receive a downlink channel such as the PDCCH.

In some possible embodiments, the first time may fall within the first duration or outside the first duration. The wake-up duration of the UE differs depending on a time domain position of the first time.

In some possible embodiments, if the first time falls within the first duration, the wake-up duration is the first wake-up duration.

In this embodiment, the first wake-up duration may be the wake-up duration reported by the user equipment 101.

In this embodiment, before step S603, the method may further include steps S611 to S612, for example:
in step S611: the network device 102 receives auxiliary information sent by the user equipment 101, where the auxiliary information is configured to indicate the first wake-up duration from a time the user equipment 101 receives the LP WUS to a time the user equipment switches into an operational state, when the user equipment 101 receives the LP WUS during the first duration.
in step S612: the network device 102 determines a corresponding first wake-up duration according to the auxiliary information.

In this embodiment, after being informed of the first wake-up duration, the network device 102 may determine the first time for sending the LP WUS in combination with the first wake-up duration, so as to be informed of the timing at which the user equipment 101 is woken up.

In some possible embodiments, if the first time falls outside the first duration, the wake-up duration is the second wake-up duration.

In this embodiment, the second wake-up duration may be configured by the network device 102 for the user equipment 101.

In this embodiment, before step S603, the method may further include the following step S621, for example:
in step S621: the network device 102 sends second indication information to the user equipment, where the second indication information is configured to indicate a second wake-up duration from a time the user equipment receives the LP WUS to a time the user equipment switches into an operational state, when the user equipment receives the LP WUS outside the first duration.

In this embodiment, the network device 102 configures the second wake-up duration for the user equipment 101, and the user equipment 101 needs to be woken up at the end time of the second wake-up duration, i.e., switch into the operational state in which the user equipment is capable of receiving the downlink channel such as the PDCCH.

In the embodiment of the present disclosure, in a scenario where the network device 102 configures a first duration for the user equipment 101, the network device 102 sends the LP WUS and the downlink information at appropriate timing in combination with the wake-up duration of the user equipment 101, so as to reasonably achieve the downlink data transmission while maintaining UE energy saving.

For ease of understanding the embodiments of the present disclosure, several specific examples are listed below:

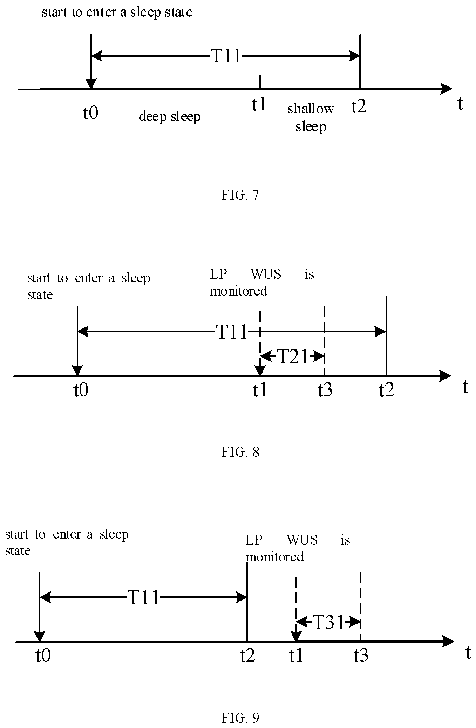

In a first example:
As shown in FIG. 7, the first duration is T11, and T11 may be 20 ms. The start time of the first duration is the effective time t0 of the first instruction, and that is, the time at which the user equipment 101 starts to enter the sleep state.

The end time of the first duration is t2, and during the first duration T11, there is a high probability that the network device 102 does not send the LP WUS.

During the first duration T11, the low-power transceiver of the user equipment 101 may monitor or may not monitor the LP WUS.

Since the first duration T11 is relatively long, the user equipment 101 may be in a deep sleep state during a period from t0 to t1, and in a shallow sleep state during a period from tl to t2. In this example, the user equipment 101 may both achieve maximum energy saving and be woken up in time to receive the downlink information.

In a second example:
As shown in FIG. 8, the first duration is T11, and T11 may be 10 ms or 20 ms. The start time of the first duration is the effective time t0 of the first instruction, and that is, the time at which the user equipment 101 starts to enter the sleep state. The end time of the first duration is t2.

The auxiliary information reported by the user equipment 101 indicates that if the LP WUS is monitored during the first duration, the wake-up duration is the first wake-up duration T21.

In order to save energy, the main transceiver of the user equipment 101 may be in the sleep state during the first duration, and the LP WUS is monitored through the low-power receiver. When the LP WUS is monitored at time t1, it indicates that the network device 102 has a need to send the downlink information. The user equipment 101 may switch to the operational state at time t3, which is after T21 duration from the time t1, and in the operational state, the downlink information sent by the network device 102 may be received.

In a third example:
As shown in FIG. 9, the first duration is T11, and T11 may be 10 ms. The start time of the first duration is the effective time t0 of the first instruction, and that is, the time at which the user equipment 101 starts to enter the sleep state.

The second wake-up duration indicated by the second indication information sent by the network device 102 is T31.

The user equipment 101 does not monitor the LP WUS during the first duration, and starts to monitor the LP WUS from the end time t2 of the first duration. If the LP WUS is monitored at time t1, it indicates that the network device 102 has a need to send the downlink information. The user equipment 101 may switch to the operational state at time t3, which is after T31 duration from the time t1, and in this operational state, the downlink information sent by the network device 102 may be received.

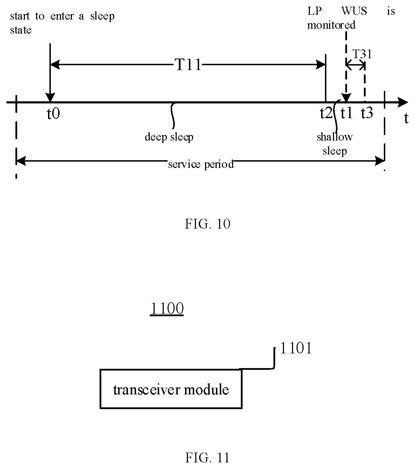

In a fourth example:
As shown in FIG. 10, the service period of the downlink data packets is 33 ms. Considering delay jitter, the first duration T11 is configured to be 20 ms. The start time of the first duration T11 is the effective time t0 of the first instruction, and that is, the time at which the user equipment 101 starts to enter the sleep state. The end time of the first duration is t2.

The second wake-up duration indicated by the second indication information sent by the network device 102 is T31, and T31 is 1 ms.

The user equipment 101 is in a deep sleep state during the 20 ms of the first duration T 11. After the end time t2 of the first duration T11, the user equipment 101 switches to a shallow sleep state and may monitor the LP WUS.

If the user equipment 101 monitors the LP WUS at time t1 outside the first duration T11, the user equipment 101 switches to the operational state at time t3, which is after the second wake-up duration T31 (which is 1 ms), and in this operational state, the downlink information sent by the network device 102 may be received.

Based on the same concept as the above method embodiments, an embodiment of the present disclosure also provides an apparatus for receiving indication information, and the apparatus may have the function of the user equipment 101 in the above method embodiments and be used to perform the steps provided in the above embodiments to be performed by the user equipment 101. The function may be achieved through hardware or through software or hardware executing corresponding software. The hardware or software includes one or more modules corresponding to the above-described function.

In a possible embodiment, the apparatus 1100 as shown in FIG. 11 may serve as the user equipment 101 involved in the above method embodiments and perform the steps performed by the user equipment 101 in one of the above method embodiments. As shown in FIG. 11, the apparatus 1100 may include a transceiver module 1101, and the transceiver module 1101 may be used to support a communication apparatus for communication.

When performing the steps implemented by the user equipment 101, the transceiver module 1101 is configured to receive first indication information sent by a network device, where the first indication information is configured to indicate a first duration, and during the first duration, the user equipment does not expect to receive a Low Power Wake-Up Signal LP WUS sent by the network device.

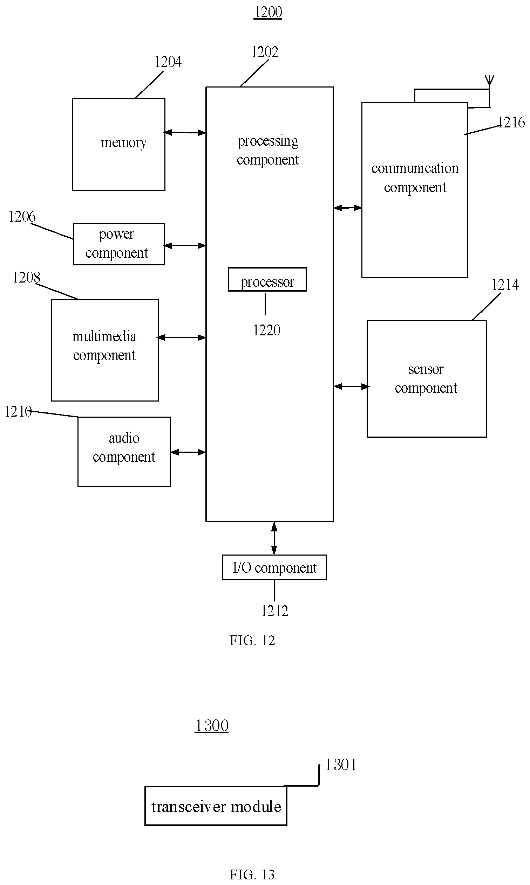

When the apparatus that receives the configuration information is the user equipment 101, its structure may further be as shown in FIG. 12. The apparatus 1200 may be a mobile phone, computer, digital broadcasting terminal, messaging device, gaming console, tablet device, medical device, fitness device, personal digital assistant, or the like.

Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the apparatus 1200, such as operations associated with display, telephone calling, data communication, camera operation, and recording operations. The processing component 1202 may include one or more processors 1220 to execute instructions to accomplish all or some of the steps of the method described above. In addition, the processing component 1202 may include one or more modules to facilitate interaction between the processing component 1202 and other components. For example, the processing component 1202 may include a multimedia module to facilitate interaction between the multimedia component 1208 and the processing component 1202.

The memory 1204 is configured to store various types of data to support operation at the apparatus 1200. Examples of such data include instructions for any application or method operated on the apparatus 1200, contact data, phone book data, messages, pictures, videos, etc. The memory 1204 may be implemented by any type of volatile or non-volatile storage apparatus or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM.

The power component 1206 provides power to various components of the apparatus 1200. The power component 1206 may include a power management system, one or more power sources, and other components associated with generating, managing, and distributing power for the apparatus 1200.

The multimedia component 1208 includes a screen providing an output interface between the apparatus 1200 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes and gestures on the touch panel. The touch sensors may not only sense the boundaries of a touch or swipe action, but also detect the duration and pressure associated with the touch or swipe operation. In some embodiments, the multimedia component 1208 includes a front camera and/or a rear camera. The front camera and/or rear camera may receive external multimedia data when the apparatus 1200 is in an operating mode, such as a shooting mode or a video mode. Each front camera and rear camera may be a fixed optical lens system or have a focal length and optical zoom capability.

The audio component 1210 is configured to output and/or input audio signals. For example, the audio component 1210 includes a microphone (MIC) configured to receive external audio signals when the apparatus 1000 is in an operational mode, such as a call mode, a recording mode, and a voice recognition mode. The received audio signals may be further stored in memory 1204 or sent via communication component 1216. In some embodiments, the audio component 1210 further includes a speaker for outputting audio signals.

The I/O interface 1212 provides an interface between the processing component 1202 and a peripheral interface module. The peripheral interface module may be a keypad, a click wheel, a button, and the like. These buttons may include, but are not limited to: a home button, a volume button, a start button, and a lock button.

The sensor component 1214 includes one or more sensors for providing an assessment of various aspects of the state of the apparatus 1200. For example, the sensor component 1214 may detect an open/closed state of the apparatus 1200, the relative positioning of components, such as the components being the display and keypad of the apparatus 1200. The sensor component 1214 may also detect a change in the position of the apparatus 1200 or of a component of the apparatus 1200, the presence or absence of user contact with the apparatus 1200, a change in the orientation of the apparatus 1200 or acceleration/deceleration, and a change in temperature of the apparatus 1200. The sensor component 1214 may include a proximity sensor configured to detect the presence of a nearby object in the absence of any physical contact. The sensor component 1214 may also include an optical sensor, such as a CMOS or CCD image sensor, for use in imaging applications. In some embodiments, the sensor component 1214 may also include an acceleration sensor, a gyroscope sensor, a magnetic sensor, a pressure sensor, or a temperature sensor.

The communication component 1216 is configured to facilitate communication between the apparatus 1200 and other device by wired or wireless means. The apparatus 1200 may access a wireless network based on a communication standard, such as Wi-Fi, 2G or 3G, or a combination thereof. In an exemplary embodiment, the communication component 1216 receives broadcast signals or broadcast-related information from an external broadcast management system via a broadcast channel. In an exemplary embodiment, the communication component 1216 further includes a near field communication (NFC) module to facilitate short range communication. For example, the NFC module may be implemented based on Radio Frequency Identification (RFID) technology, Infrared Data Association (IrDA) technology, Ultra Wide Band (UWB) technology, Bluetooth (BT) technology and other technologies.

In exemplary embodiments, the apparatus 1200 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 1204 including instructions, the instructions being executable by a processor 1220 of the apparatus 1200 to accomplish the methods described above. For example, the non-transitory computer-readable storage medium may be ROM, random access memory (RAM), CD-ROM, magnetic tape, floppy disks, and optical data storage devices, among others.

Based on the same concept as the above method embodiments, an embodiment of the present disclosure also provides an apparatus for sending indication information. The apparatus may include the functionalities of the network device 102 in the above method embodiments, and may be used to perform the steps executed by the network device 102 as described in the method embodiments. The function may be achieved through hardware or through software or hardware executing corresponding software. The hardware or software includes one or more modules corresponding to the above-described function.

In a possible embodiment, the communication apparatus 1300 shown in FIG. 13 may serve as the network device 102 in the above method embodiments and may execute the steps performed by the network device 102 in the above method embodiments. As shown in FIG. 13, the communication apparatus 1300 may include a intercoupling transceiver module 1301, where the transceiver module 1301 may be used to support a communication apparatus for communication, and the transceiver module 1301 may have wireless communication function, such as wireless communication with other communication apparatus via a wireless air interface.

When performing the steps implemented by the network device 102, the transceiver module 1301 is configured to send first indication information to a user equipment, where the first indication information is configured to indicate a first duration, and the first duration corresponds to a period during which the user equipment is capable of being in a sleep state.

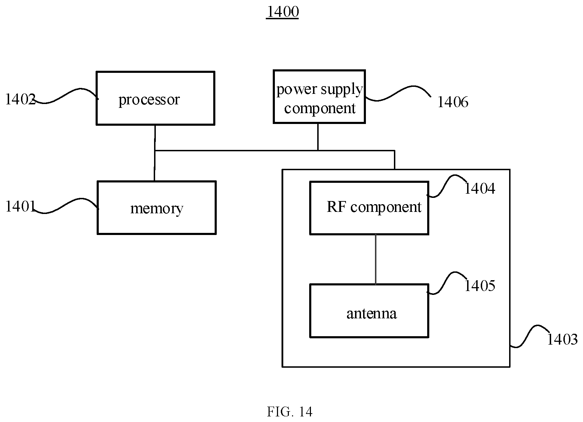

When the communication apparatus is the network apparatus 102, the structure may also be as shown in FIG. 14. Taking a base station as an example, the structure of the communication apparatus is described. As shown in FIG. 14, the apparatus 1400 includes a memory 1401, a processor 1402, a transceiver component 1403, and a power supply component 1406. The memory 1401 is coupled to the processor 1402, which may be used to store programs and data necessary for the communication apparatus 1400 to implement various functions. The processor 1402 is configured to support the communication apparatus 1400 in performing the corresponding function in the method described above, and this function may be achieved by calling a program stored in the memory 1401. The transceiver component 1403 may be a wireless transceiver that may be used to support the communication apparatus 1400 in performing receiving signaling and/or data, and transmitting signaling and/or data, over a wireless air port. The transceiver component 1403 may also be referred to as a transceiver unit or a communication unit, and the transceiver component 1403 may include an radio frequency (RF) component 1404 and one or more antennas 1405, where the RF component 1404 may be a remote radio unit (RRU), which may be used specifically for transmission of RF signals and conversion of RF signals to baseband signals, and the one or more antennas 1405 may be specifically used to perform radiation and reception of RF signals.

When the communication apparatus 1400 needs to send data, the processor 1402 may output a baseband signal to a radio frequency unit after baseband processing of the data to be sent, and the radio frequency unit will send the radio frequency signal through an antenna in the form of electromagnetic waves after radio frequency processing of the baseband signal. When there is data sent to the communication apparatus 1400, the radio frequency unit receives the radio frequency signal through the antenna, converts the radio frequency signal to a baseband signal, and outputs the baseband signal to the processor 1402, which converts the baseband signal to data and processes the data.

After considering the specification and practicing the invention disclosed here, those skilled in the art will easily conceive of other embodiments of the present disclosure. This application is intended to cover any modifications, uses, or adaptive changes of the embodiments of the present disclosure, which follow the general principles of the disclosed embodiments and include commonly known knowledge or customary technical means in the technical field that are not explicitly disclosed in this disclosure. The specification and examples are to be regarded as exemplary only, and the true scope and spirit of the embodiments of the present disclosure are indicated by the following claims.

It should be understood that the embodiments of the present disclosure are not limited to the precise structures that have been described above and illustrated in the drawings, and various modifications and changes may be made without departing from the scope of the disclosure. The scope of the embodiments of the present disclosure is limited only by the appended claims.

### Industrial Applicability

In the method of the present disclosure, the user equipment may be informed of the first duration through the first indication information sent by the network device. After receiving the first indication information, the user equipment may, in combination with the value of the first duration, adaptively determine which sleep state to be in, so as to achieve efficient power saving and facilitate timely wake-up.

## Claims

1. A method for receiving indication information, performed by a user equipment, comprising:
receiving first indication information sent by a network device, wherein the first indication information is configured to indicate a first duration, and during the first duration the user equipment does not expect to receive a low power wake-up signal LP WUS sent by the network device.

2. The method according to claim 1, wherein a start time of the first duration is an effective time of a first instruction, and the first instruction is configured to indicate the user equipment to enter a sleep state.

3. The method according to claim 1, further comprising:
receiving the low power wake-up signal LP WUS at an end time of the first duration or after the first duration.

4. The method according to claim 1, further comprising:
not monitoring the LP WUS during the first duration.

5. The method according to claim 1, further comprising:
monitoring the LP WUS during the first duration.

6. The method according to claim 1 or 5, further comprising:
sending auxiliary information to the network device, wherein the auxiliary information is configured to indicate, when the LP WUS is received during the first duration, a first wake-up duration from a time the user equipment receives the LP WUS to a time the user equipment switches to an operational state.

7. The method according to claim 6, wherein the auxiliary information comprises a plurality of the first wake-up durations respectively corresponding to different first durations.

8. The method according to claim 1, further comprising:
receiving second indication information sent by the network device, wherein the second indication information is configured to indicate, when the LP WUS is received outside the first duration, a second wake-up duration from a time the user equipment receives the LP WUS to a time the user equipment switches into an operational state.

9. The method according to claim 1, wherein the receiving the first indication information sent by the network device comprises:
receiving a high-layer signaling sent by the network device, wherein the high-layer signaling comprises an information field for indicating the first indication information.

10. The method according to claim 1, wherein the receiving the first indication information sent by the network device comprises:
receiving downlink control information DCI sent by the network device, wherein the DCI comprises an information field for indicating the first indication information.

11. The method according to claim 10, wherein the first indication information indicated by the DCI takes effect after a second duration from reception of the DCI by the user equipment.

12. The method according to any one of claims 1 to 11, wherein
before (N+1)th first indication information is received, Nth first indication information remains effective.

13. A method for sending indication information, performed by a network device, comprising:
sending first indication information to a user equipment, wherein the first indication information is configured to indicate a first duration, and during the first duration the user equipment does not expect to receive a low power wake-up signal LP WUS sent by the network device.

14. The method according to claim 13, wherein a start time of the first duration is an effective time of a first instruction, and the first instruction is configured to indicate the user equipment to enter a sleep state.

15. The method according to claim 13, wherein the sending the first indication information to the user equipment comprises:
sending a high-layer signaling to the user equipment, wherein the high-layer signaling comprises an information field for indicating the first indication information.

16. The method according to claim 13, wherein the sending the first indication information to the user equipment comprises:
sending DCI to the user equipment, wherein the DCI comprises an information field for indicating the first indication information.

17. The method according to claim 16, wherein the first indication information indicated by the DCI takes effect after a second duration from reception of the DCI by the user equipment.

18. The method according to any one of claims 13 to 17, wherein before the user equipment receives (N+1)th first indication information, Nth first indication information remains effective.

19. The method according to claim 13, further comprising:
not sending downlink information during the first duration.

20. The method according to claim 13, further comprising:
sending the LP WUS to the user equipment at a first time; and
sending downlink information after a wake-up duration from reception of the LP WUS by the user equipment.

21. The method according to claim 20, wherein:
if the first time is within the first duration, the wake-up duration is a first wake-up duration.

22. The method according to claim 21, further comprising:
receiving auxiliary information sent by the user equipment, wherein the auxiliary information is configured to indicate, when the user equipment receives the LP WUS during the first duration, the first wake-up duration from a time the user equipment receives the LP WUS to a time the user equipment switches to an operational state; and
determining the first wake-up duration corresponding to the auxiliary information according to the auxiliary information.

23. The method according to claim 20, wherein:
if the first time is outside the first duration, the wake-up duration is a second wake-up duration.

24. The method according to claim 23, further comprising:
sending second indication information to the user equipment, wherein the second indication information is configured to indicate, when the user equipment receives the LP WUS outside the first duration, the second wake-up duration from a time the user equipment receives the LP WUS to a time the user equipment switches into an operational state.

25. An apparatus for receiving indication information, configured for a user equipment, comprising:
a transceiver module, configured to receive first indication information sent by a network device, wherein the first indication information is configured to indicate a first duration, and during the first duration the user equipment does not expect to receive a low power wake-up signal LP WUS sent by the network device.

26. An apparatus for sending indication information, configured for a network device, comprising:
a transceiver module, configured to send first indication information to a user equipment, wherein the first indication information is configured to indicate a first duration, and the first duration corresponds to a period during which the user equipment is capable of being in a sleep state.

27. A communication apparatus, comprising a processor and a memory, wherein:
the memory is configured to store a computer program; and
the processor is configured to execute the computer program to implement the method according to any one of claims 1 to 12.

28. A communication apparatus, comprising a processor and a memory, wherein:
the memory is configured to store a computer program; and
the processor is configured to execute the computer program to implement the method according to any one of claims 13 to 24.

29. A computer-readable storage medium, wherein the computer-readable storage medium stores instructions, which, when executed by a computer, cause the computer to perform the method according to any one of claims 1 to 12.

30. A computer-readable storage medium, wherein the computer-readable storage medium stores instructions, which, when executed by a computer, cause the computer to perform the method according to any one of claims 13 to 24.
